# EUROPÄISCHE PATENTSCHRIFT

(11) **EP 0 791 499 B1**
(45) Veröffentlichungstag und Bekanntmachung des Hinweises auf die Patenterteilung: **20.10.2004**
(21) Anmeldenummer: 97101849.4
(22) Anmeldetag: 06.02.1997
(51) Int. Cl.: B60R 21/00

(54) **Kraftfahrzeug mit zumindest einem beifahrerseitigen Fahrzeugsitz**
Automotive vehicle with at least one passenger seat
Véhicule automobile à au moins un siège de passager

(30) Priorität: 20.02.1996 DE 19606140; 17.07.1996 DE 19628763
(43) Veröffentlichungstag der Anmeldung: 27.08.1997
(73) Patentinhaber: Dr.Ing.h.c. F. Porsche Aktiengesellschaft, 70435 Stuttgart (DE)
(72) Erfinder: Bögge, Herbert, 75446 Wiernsheim (DE)

(56) Entgegenhaltungen:
- DE-A- 4 243 826
- DE-U- 9 410 632

## Beschreibung

Die Erfindung bezieht sich auf ein Kraftfahrzeug mit zumindest einem Fahrzeugsitz gemäß den Merkmalen des Oberbegriffs des Patentanspruchs 1.

Bei einer bekannten Anordnung der eingangs genannten Gattung (DE 42 43 826 A1) weist der Fahrzeugsitz beiderseits des Sitzkissens im Bereich zwischen den Rückenlehnen-Beschlägen und der Rückenlehne Gurtschlösser auf, in die korrespondierende Rasten des Kindersitzes einsteckbar sind. Die Gurtschlösser sind dabei mit einem auf das Befestigen dese Kindersitzes reagierenden Sensor zur Entaktivierung des Airbags versehen. Bei dieser Anordnung wird also gleichzeitig mit dem Befestigen des Kindersitzes am Fahrzeugsitz der zugehörige Airbag entaktiviert.

Dieser Anordnung haftet der Nachteil an, dass eine Nachrüstbarkeit bei vorhandenen Serienfahrzeugen nur schwerlich mit vertretbarem Aufwand machbar ist, da sowohl am Kindersitz als auch am Fahrzeugsitz spezielle Anbauteile wie Rasten, Gurtschlösser oder dergleichen vorgesehen werden müssen.

Aus der DE 94 10 632 U geht ein Kraftfahrzeug mit zumindest einem Fahrzeugsitz hervor, an dem ein aufgesetzter Kindersitz befestigbar ist. Zum Befestigen des Kindersitzes und zur Entaktivierung eines vorgelagerten Airbags ist ein zusätzlicher zweiteiliger Spanngurt vorgesehen, wobei ein Gurtteil an der Rückenlehne des Kindersitzes und das andere Gurtteil an einer am Sitzrahmen des Beifahrersitzes angeordneten Befestigungsvorrichtung verankert ist. Beide Gurtteile sind durch verrastbare Mittel, wie beispielsweise ein an sich bekanntes Gurtschloss und eine Steckzunge, verbindbar.

Eine Nachrüstbarkeit bei vorhandenen Serienfahrzeugen ist bei dieser Anordnung schwerlich mit vertretbarem Aufwand realisierbar, da sowohl am Kindersitz als auch am Fahrzeugsitz aufwendige Maßnahmen getätigt werden müssen.

Aufgabe der Erfindung ist es, bei einem Fahrzeug mit zumindest einem Fahrzeugsitz und einem aufgesetzten Kindersitz eine Vorrichtung zur Entaktivierung des vorgelagerten Airbags zu schaffen, die sich auch bei vorhandenen Serienfahrzeugen einfach und kostengünstig nachrüsten lässt.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass die aus einer zusätzlichen Steckzunge am Kindersitz und einem mit der zentralen Auslöseeinheit in Wirkverbindung stehenden Steckschloss gebildete Vorrichtung zur Entaktivierung des Airbags einen einfachen Aufbau aufweist und sich auch nachträglich mit geringem Aufwand bei Serienfahrzeugen nachrüsten läßt.

Erst durch manuelles Einstecken der Steckzunge in das Steckschloß wird der Airbag entaktiviert, beim Trennen der Steckverbindung hingegen wieder aktiviert. Diese zusätzliche Steckverbindung dient nicht zur Festlegung des Kindersitzes auf dem Fahrzeugsitz. Die Steckzunge und das Steckschloß zur Entaktivierung des Airbags sind anders dimensioniert als die Steckzunge und das Steckschloß des Sicherheitsgurtsystems für den Fahrzeugsitz, so daß Fehlbedienungen ausgeschlossen werden.

Ein Ausführungsbeispiel der Erfindung ist in den Zeichnungen dargestellt und wird im folgenden näher beschrieben.

Es zeigen
- Fig. 1: eine perspektivische Ansicht von schräg vorne auf einen auf das Sitzkissen eines Fahrzeugsitzes aufgesetzten, rückwärtsgerichteten Kindersitz,
- Fig. 2: eine Seitenansicht des Fahrzeugsitzes mit dem aufgesetzten Kindersitz (Reboard-Sitz),
- Fig. 3: eine Draufsicht auf die querverlaufende Traverse mit dem Steckschloß und
- Fig. 4: einen Schnitt nach der Linie Iv-IV der Fig. 3.

Das in den Figuren nicht näher dargestellte Kraftfahrzeug weist zumindest einen Fahrzeugsitz 1 mit einem darauf befestigbaren Kindersitz 2 auf. Die Befestigung des auf das Sitzteil 3 des Fahrzeugsitzes 1 aufgesetzten Kindersitzes 2 erfolgt mittels eines herkömmlichen Dreipunkt-Sicherheitsgurtes 4, der bei abgenommenem Kindersitz 2 zur Festlegung eines auf dem Fahrzeugsitz sitzenden Fahrzeuginsassen dient. Der Kindersitz 2 kann in Fahrtrichtung - nicht näher dargestellt - oder entgegen der Fahrtrichtung ausgerichtet sein.

Der Kindersitz 2 ist mit einem eigenen, nicht näher dargestellten Sicherheitsgurt (Hosenträgergurt oder Fangtisch) zum Festhalten eines Kindes versehen.

Damit bei einem Fahrzeugaufprall der sich öffnende vorgelagerten Airbag nicht gegen den Kindersitz 1 prallen und somit gegebenenfalls schwere Verletzungen beim Kind verursachen kann, ist eine Vorrichtung 6 zur Entaktivierung des nicht gezeigten Airbags bei montiertem Kindersitz 2 vorgesehen.

Die Vorrichtung 6 umfaßt eine am Kindersitz 2 zusätzlich angebrachte Steckzunge 7 und ein mit einer nicht näher dargestellten zentralen Auslöseeinheit für die Airbags in Wirkverbindung stehendes Steckschloß 8, wobei durch manuelles Einstecken der Steckzunge 7 in das Steckschloß 8 der Airbag entaktiviert und durch Lösen der Steckverbindung wieder aktiviert wird. Das Steckschloß 8 ist an einer in Fahrrichtung gesehen vor dem Fahrzeugsitz 1 angebrachten, querverlaufenden Traverse 9 angeordnet. Die in der Draufsicht gesehen etwa U-förmige Traverse 9 ist an ihren beiden längsverlaufenden Enden an den korrespondierenden Sitzschienen 10 lösbar befestigt. Dies erfolgt beispielsweise durch Schrauben.

In einem mittleren Bereich der Quererstreckung der einen kreisrunden Querschnitt aufweisenden Traverse 9 erstreckt sich das Steckschloß 8, wobei zwischen Traverse 9 und Steckschloß 8 ein kurzer Gurtbandabschnitt 11 verläuft. Der querverlaufende Abschnitt der Traverse 9 verläuft benachbart des Bodens des Kraftfahrzeuges.

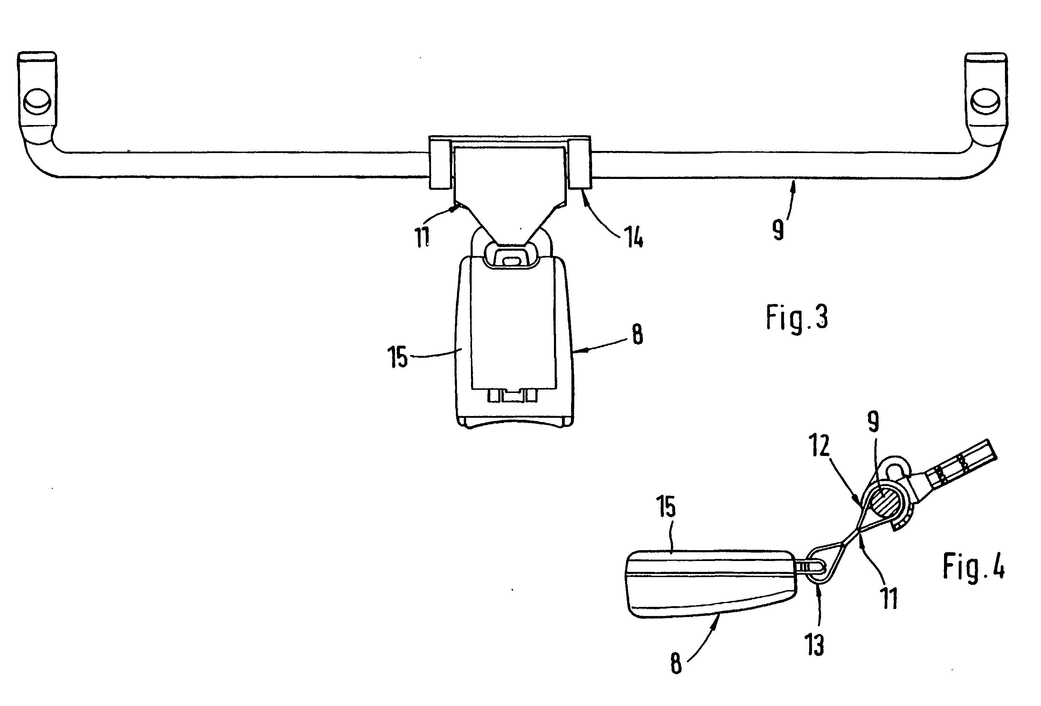

Im Ausführungsbeispiel umgibt ein erster ösenartiger Endbereich 12 des Gurtbandabschnitts 11 die querverlaufende Traverse 9, wogegen ein zweiter ösenartiger Endbereich 13 mit dem Steckschloß 8 verbunden ist (Fig. 4).

Der die Traverse 9 umgebende ösenartige Endbereich 12 ist mittels eines aufgeclipsteh Stoppers 14 gegen seitliches Verschieben gesichert. Das Steckschloß 8 weist innerhalb des Gehäuses 15 einen nicht näher dargestellten herkömmlichen Schalter auf, der über eine Verbindungsleitung 16 an die zentrale Auslöseeinheit angeschlossen ist. Die zentrale Auslöseeinheit wird bei Verwendung eines Kindersitzes 2 von der Fachwerkstätte umprogrammiert.

Die zusätzliche Steckzunge 7 ist in einem mittleren Bereich der Quererstreckung des Kindersitzes 2 angeordnet, wobei zwischen Steckzunge 7 und Kindersitz 2 ein Gurtbandabschnitt 17 verläuft.

Die Steckzunge 7 und das Steckschloß 8 zur Entaktivierung des Airbags sind anders dimensioniert als die Steckzunge und das Gurtschloß des Sicherheitsgurtes 4 für den Fahrzeugsitz 1, um Fehlbedienungen auszuschließen.

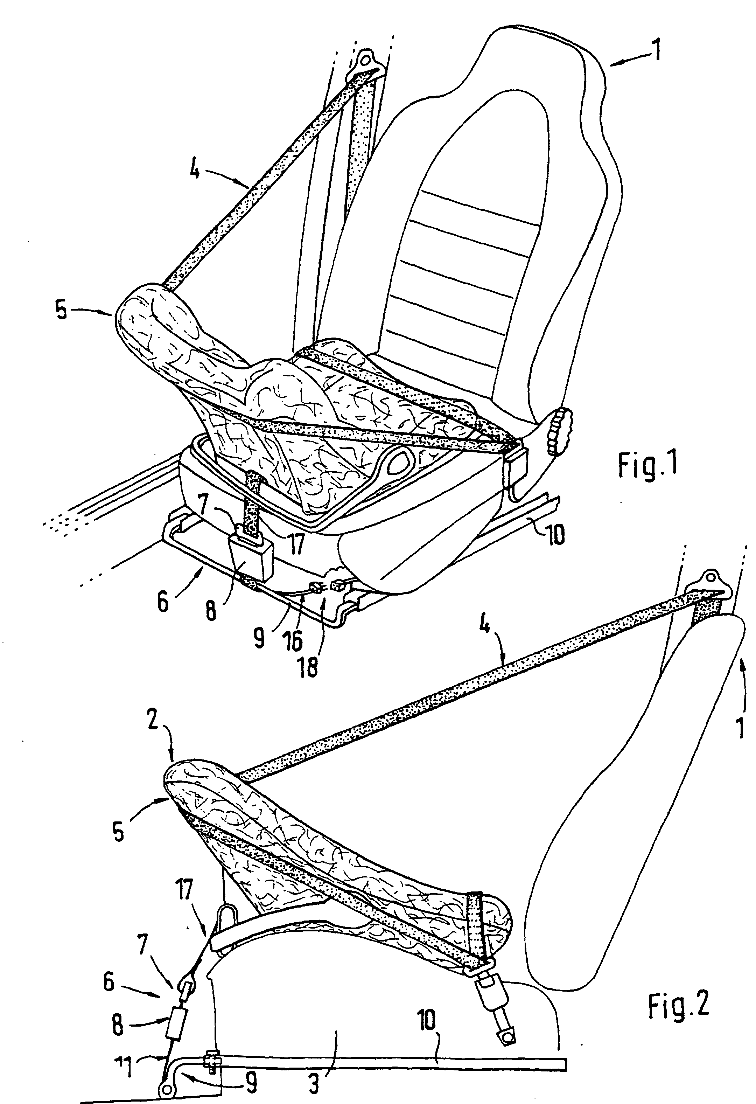

In den Fig. 1 und 2 ist die zusätzliche Steckzunge 7 des Kindersitzes 2 in das korrespondierende Steckschloß 8 eingesteckt und somit der Airbag entaktiviert.

In Fig. 1 ist die Steckverbindung 18 der zur zentralen Auslöseeinheit führenden Verbindungsleitung 16 in entkoppelter Stellung dargestellt; in Wirkstellung sind die beiden Steckerteile der Steckverbindung 18 miteinander verbunden.

Gemäß Fig. 1 ist ein Beifahrersitz mit einem aufgesetzten rückwärtsgerichteten Kindersitz dargestellt. Bei dieser Anordnung dient die Vorrichtung 6 zur Entaktivierung des Beifahrerairbags. Die Vorrichtung 6 könnte jedoch auch einem fondseitigen Fahrzeugsitz zugeordnet sein, bei dem der zugeordnete Airbag an der Rückseite der vorderen Fahrzeugsitze angeordnet ist. Zudem kann der Kindersitz parallel zum Fahrzeugsitz, also vorwärtsgerichtet am Fahrzeugsitz aufgesetzt sein.

## Patentansprüche

1. Kraftfahrzeug mit zumindest einem Fahrzeugsitz, an dem ein aufgesetzter Kindersitz 5 befestigbar ist, wobei eine Vorrichtung zur Entaktivierung eines vorgelagerten Airbags bei montiertem Kindersitz vorgesehen ist, die durch eine am Kindersitz (2) zusätzlich angebrachte Steckzunge (7) und ein mit einer zentralen Auslöseeinheit in Wirkverbindung stehendes Steckschloss (8) gebildet wird, wobei durch Einstecken der Steckzunge (7) in das Steckschloss (8) der vorgelagerte Airbag entaktiviert und durch Lösen der Steckverbindung wieder aktiviert wird, **dadurch gekennzeichnet, dass** das Steckschloss (8) an einer in Fahrtrichtung gesehen vor dem Fahrzeugsitz (1) angebrachten querverlaufenden Traverse (9) angeordnet ist, wobei die Traverse (9) an ihren beiden längsverlaufenden Enden an den korrespondierenden Sitzschienen (10) festgeschraubt ist.

2. Kraftfahrzeug nach Anspruch 1, **dadurch gekennzeichnet, dass** das Steckschloss (8) in einem mittleren Bereich der Quererstreckung der Traverse (9) angeordnet ist, wobei der zwischen Steckschloss (8) und Traverse (9) verlaufende Gurtbandabschnitt (11) in Querrichtung durch auf die Traverse (9) aufgesetzte Stopper (14) gegen seitliches Verschieben gesichert ist.

3. Kraftfahrzeug nach den Ansprüchen 1 und 2, **dadurch gekennzeichnet, dass** das Steckschloss (8) einen integrierten Schalter aufweist, der über eine Verbindungsleitung (16) an die zentrale Auslöseeinheit angeschlossen ist.

4. Kraftfahrzeug nach Anspruch 1, **dadurch gekennzeichnet, dass** die zusätzliche Steckzunge (7) und das Steckschloss (8) am Kindersitz (2) anders dimensioniert sind, als die Steckzungen und Gurtschlösser des Sicherheitsgurtsystems für den Fahrzeugsitz (1).

5. Kraftfahrzeug nach Anspruch 1, **dadurch gekennzeichnet, dass** die zentrale Auslöseeinheit bei Verwendung eines Kindersitzes (2) umprogrammiert wird.

## Claims

1. A motor vehicle with at least one vehicle seat to which a child's seat placed thereon can be fastened, wherein a device is provided for disabling an airbag - situated in front - when the child's seat is mounted, which device is formed by an insertion tongue (7) additionally attached to the child's seat (2) and an insertion lock (8) operatively connected to the central release unit, wherein the airbag situated in front is disabled by inserting the insertion tongue (7) into the insertion lock (8) and is enabled again by releasing the insertion connexion, **characterized in that** the insertion lock (8) is arranged on a transversely extending cross member (9) attached in front of the vehicle seat (1) as viewed in the direction of travel, wherein the cross member (9) is bolted in a fixed manner at its two longitudinally extending ends to the corresponding seat rails (10).

2. A motor vehicle according to Claim 1, **characterized in that** the insertion lock (8) is arranged in a middle region of the transverse extension of the cross member (9), wherein the portion (11) of the belt strap extending between the insertion lock (8) and the cross member (9) is prevented by a stop (14) mounted on the cross member (9) from being shifted laterally.

3. A motor vehicle according to Claims 1 and 2, **characterized in that** the insertion lock (8) comprises an integrated switch which is attached to the central release unit by way of a connecting line (16).

4. A motor vehicle according to Claim 1, **characterized in that** the additional insertion tongue (7) and the insertion lock (8) on the child's seat (2) have different dimensions from the insertion tongues and belt locks of the seat-belt system for the vehicle seat (1).

5. A motor vehicle according to Claim 1, **characterized in that** the central release unit is reprogrammed when a child's seat (2) is used.

## Revendications

1. Véhicule automobile avec au moins un siège auquel peut être fixé un siège enfant placé dessus, dans lequel il est prévu un dispositif de désactivation d'un airbag placé devant, lorsque le siège enfant est monté, lequel dispositif est formé par une languette à enficher (7) placée en supplément sur le siège enfant (2) et par un fermoir à enfichage (8) en liaison active avec une unité de déclenchement centrale, dans lequel par enfichage de la languette (7) dans le fermoir (8), l'airbag placé devant est désactivé et par suppression de la liaison par enfichage il est à nouveau activé, **caractérisé en ce que** le fermoir (8) est disposé sur une traverse (9) s'étendant transversalement placée devant le siège (1) du véhicule, vu dans le sens de marche, la traverse (9) étant vissée fermement, à ses deux extrémités s'étendant longitudinalement, aux rails (10) correspondants du siège.

2. Véhicule automobile selon la revendication 1, **caractérisé en ce que** le fermoir (8) est disposé dans une zone centrale de l'étendue transversale de la traverse (9), la portion de sangle de ceinture (11), s'étendant entre le fermoir (8) et la traverse (9), étant bloquée dans la direction transversale contre un coulissement latéral par des organes d'arrêt (14) placés sur la traverse (9).

3. Véhicule automobile selon les revendications 1 et 2, **caractérisé en ce que** le fermoir (8) comporte un interrupteur intégré qui est raccordé par une ligne de liaison (16) à l'unité de déclenchement centrale.

4. Véhicule automobile selon la revendication 1, **caractérisé en ce que** la languette à enficher (7) supplémentaire et le fermoir (8) présentent sur le siège enfant (2) des dimensions différentes de celles des languettes à enficher et des fermoirs de ceinture du système de ceinture de sécurité du siège (1) du véhicule.

5. Véhicule automobile selon la revendication 1, **caractérisé en ce que** l'unité de déclenchement centrale est reprogrammée lorsque l'on utilise un siège enfant (2).
